Europäisches Patentamt

European Patent Office

Office européen des brevets

(19)

(11) Veröffentlichungsnummer: **0 176 627
B1**

(12) **EUROPÄISCHE PATENTSCHRIFT**

(45) Veröffentlichungstag der Patentschrift:
11.10.89

(51) Int. Cl.⁴: **B 65 G 53/06**

(21) Anmeldenummer: 84116170.6

(22) Anmeldetag: 22.12.84

(54) Verfahren und Einrichtung zum pneumatischen und hydraulischen Transport von Feststoffen durch Rohrleitungen.

(30) Priorität: 29.09.84 DE 3435907

(43) Veröffentlichungstag der Anmeldung:
09.04.86 Patentblatt 86/15

(45) Bekanntmachung des Hinweises auf die Patenterteilung: 11.10.89 Patentblatt 89/41

(84) Benannte Vertragsstaaten:
Cri DE FR GB LI NL

(56) Entgegenhaltungen:
DE–C– 2 305 030
DE–C– 2 550 164
VERFAHRENSTECHNIK, Band 12, Nr. 4, 1978; W. KRAMBROCK "Möglichkeiten zum Verhindern der Stopfenbildung beim pneumatischen Transport", Seiten 190,192,194,196,200,202

(73) Patentinhaber: AVT Anlagen- und Verfahrenstechnik GmbH
Aichenwiesen 18
D-7981 Vogt (DE)

(72) Erfinder: Krambrock, Wolfgang, Dipl.-Ing.
Aichenwiesen 18
D-7981 Vogt (DE)

(74) Vertreter: Patentanwälte Dipl.-Ing. E. Eisele Dr.-Ing. H. Otten
Seestrasse 42
D-7980 Ravensburg (DE)

EP 0 176 627 B1

## Beschreibung

Die Erfindung betrifft ein Verfharen sowie eine Vorrichtung zur Durchführung des Verfahrens nach dem Oberbegriff der Ansprüche 1 und 3.

Pneumatische oder hydraulische Förderanlagen arbeiten bekanntlich umso wirtschaftlicher, je größer die Feststoffmenge ist, die von einer bestimmten Gas- bzw. Flüssigkeitsmenge transportiert werden kann. Da sich der Verschleiß der Rohrleitung und der transportierten Feststoffpartikel mit abnehmender Transportgeschwindigkeit stark reduzieren läßt, werden geringe Gas- bzw. Flüssigkeitsgeschwindigkeiten im Förderrohr angestrebt. Weiterhin läßt sich die Bildung von Wandansätzen beim Transport von haftenden, feinkörnigen Feststoffen insbesondere beim pneumatischen Transport mit abnehmender Gasgeschwindigkeit verringern.

Der Herabsetzung der Gas- bzw. Flüssigkeitsgeschwindigkeit und der Zunahme der Feststoffbeladung des Transportfluids sind in der Praxis jedoch Grenzen gesetzt, da sich bei zu geringen Strömungsgeschwindigkeiten ein Teil des Feststoffes am Rohrboden absetzt und dort in Form von Strähnen und Dünen schubweise voranbewegt. Durch Aufeinanderlaufen dieser Schüttgutanhäufungen bilden sich geschlossene Stopfen, die die Transportleitung jederzeit blockieren können.

Zum Verhindern der Stopfenbildung sind verschiedene Verfahren und Vorrichtung bekanntgeworden, bei denen der Förderleirung an vielen hintereinander-liegenden Stellen über eine innen- oder außenliegende Begleitleitung zusätzliches Gas oder zusätzliche Flüssigkeit zugeführt wird. (DE-C-449 393, DE-B-1191 741, DE-B-2022 962).

Alle diese Verfahren haben den Nachteil, daß die Gas- bzw. Flüssigkeitsmenge und damit die Strömungsgeschwindigkeit im Förderrohr mit zunehmender Transportstrecke ansteigt, was letztendlich wieder zu einer unwirtschaftlichen Förderung mit entsprechendem Rohrleitungs- und Partikelverschleiß und bei klebenden Feststoffen zur Bildung verstärkter Wandansätze führt.

Bei einem weiteren Verfahren, das in der DE-C-1174 256 beschrieben ist, werden rohrparallele Abzweigungen in aneinanderfolgenden Abständen jeweils aus dem Förderrohr heraus- und wieder hineingeführt. Dadurch soll das reine Fluid nach derBildung eines längeren Feststoffstopfens vom stromaufwärts gelegenen Anfang des Stopfens in ihn hineingeleitet werden und den Stopfen dabei in kürzere Teilstücke aufspalten. Da das Nebenrohr einen wesentlich geringeren Querschnitt aufweist, als das Förderrohr, treten im Nebenrohr während der « Stopfenumströmung » sehr hohe Strömungsgeschwindigkeiten auf, die einen erhöhten Verschleiß des Nebenrohres und der transportierten Partikel bewirken. Beim Transport haftender Feststoffe verstopft das Nebenrohr selbst, wodurch es wirkungsklos wird.

Bei einer weiteren Einrichtung gemäß DE-A-2550 164 und DE-A-2305 030 werden sich bildende Feststoffstopfen beim pneumatischen Transport über den Druckabfall in der Förderleitung lokalisiert und durch Einleiten von zusätzlichem Gas in den von der Verstopfung bedrohten Rohrleitungsabschnitt beseitigt.

Dazu ist ein reingasführendes Nebenrohr über viele in Richtung des Förderrohres wirkende Rückschlagventile und in Kombination mit den Rückschlagventilen oder einzeln wirkenden Sperrventilen verbunden, wobei letztere die Luftzufuhr in den von der Verstopfung bedrohten Förderleitungsabschnitt bewirken.

Mit Hilfe dieser Einrichtung kann der zur pneumatischen Förderung notwendige Gasstrom im Vergleich zu einer konventionellen Förderanlage vielfach auf weniger als 50% gesenkt werden. Zur raschen und wirksamen Beseitigung eines entstehenden Stopfens muß über die Überströmventile eine Mindestgasmenge in den entsprechenden Rohrleitungsabschnitt geleitet werden. Da der Strömungswiderstand des Nebenrohres mit zunehmender Leitungslänge ansteigt, nimmt die durch das Nebenrohr strömende Gasmenge mit zunehmender Förderstrecke ab. Das Nebenrohr strömende Gasmenge mit zunehmender Förderstrecke ab. Das Nebenrohr darf daher in der Praxis nicht viel länger sein als ca. 100 bis 150 m, da sonst die zur Stopfenauflösung notwendige Mindestgasmenge nicht mehr in das stromabwärts liegende Ende der Förderleitung nachströmen kann.

Ein weiterer Nachteil des beschriebenen Verfahrens liegt darin, daß die Funktion der gesamten Einrichtung von der einwandfreien Funktion eines jeden einzelnen der nacheinander durchströmten Sperrventile abhängt. Kommt es zum Ausfall eines solchen Ventils, dann kommt es je nach dessen momentaner Stellung zum Ausfall des stromaufwärts oder stromabwärts benachbarten Teiles des Nebenrohres, was normalerweise mit einem Verstopfen des entsprechenden Förderrohrabschnittes verbunden ist.

Kommt es infolge von nur einem defekten Überstom- oder Sperrventil zu einem Eindringen von Feststoff aus der Förderleitung in das Nebenrohr, dann werden alle stromabwärts dahinter befindlichen Ventile in ihrer Funktion beeinträchtigt, was sich durch einen Rückgang des transportierten Feststoff-Durchsatzes oder durch eine Verstopfung der Förderleitung bemerkbar macht. In diesem Fall müssen alle vom Feststoff durchströmten Ventile entfernt und einzeln demontiert und gereinigt werden. Dies ist besonders nachteilig, da es dadurch zu einem beträchtlichen Srillstand der Förderanlage kommen kann.

Insbesondere bei langen Förderleitungen, die mit niedrigen Gasgeschwindigkeiten betrieben werden, kommt es vor, daß sich zwei oder mehrere Stopfen in verschiedenen Abschnitten zur gleichen Zeit bilden. Der Natur des besprochenen Förderverfahrens entsprechend, wird dann nur Nebenluft in den sich am weitesten stromabwärts bildenden Stopfen geleitet. Dadurch können sich zwischenzeitlich im stromaufwärts davor liegenden Förderleitungsteil kompakte Stopfen ausbilden. Die Beseitigung dieser Stopfen entgegen der Strömungsrichtung erfolgt erst, wenn alle stromabwärts dahinter befindlichen Störungen beseitigt sind. Da die Beseitigung kompakter Stopfen jedoch Zeitspannen von bis zu einigen Minuten in Anspruch nimmt, kommt der Feststofftransport unerwünschterweise für diese Zeit zum Erliegen.

Die mit Hilfe der Nebenluft in Teilstücke aufgespaltenen Stopfenabschnitte bewegen sich infolge des stromaufwärts davon befindlichen verdichteten Gases häufig geschoßartig mit hoher Geschwindigkeit durch das Förderrohr, was bei schließenden Substanzen zu einem erhöhten Verschleiß an der Förderleitung und den daran angebrachten Ventilen führt. Bei abriebempfindlichen Fördergütern kann es zu einem erhöhen Bruch der einzelnen Partikel kommen.

Aus der Druckschrift VT Verfahrenstechnik 12 (1978) Nr. 4, S. 200, Fig. 12, ist eine Vorrichtung nach dem Gattungsbegriff des Vorrichtungsanspruchs der vorliegenden Erfindung bekannt geworden. Diese Vorrichtung und das damit verbundene Verfahren hat den Nachteil, daß ein hoher technischer Aufwand notwendig ist, der in seinem komplizierten Aufbau als wirtschaftlich völlig uninteressante Lösung dargestellt wird. Zwar wird hier eine Vergleichsmessung zwischen zwei aufeinanderfolgenden Meßstellen durchgeführt, wobei der Druckanstieg in der ersten Meßstelle ausschlaggebend ist für die Zufuhr von zusätzlichem reinen Gas oder reiner Flüssigkeit zur stromabwärts liegenden Meßstelle. Die Anordnung erfordert jedoch zwei Druckerfassungsmeßstellen, die über eine mechanische Waage und eine Gegendruckfeder aufeinander abzustimmen sind. Dies ist jedoch kompliziert, störungsanfällig und deshalb in seiner Handhabung unbrauchbar.

Der Erfindung liegt daher die Aufgabe zugrunde, diese Nachteile zu vermelden und insbesondere die Dildung von einem oder mehreren Stopfen in pneumatischen oder hydraulischen Förderleitungen abschnittsweise und unabhängig voneinander zu erkennen und ebenfalls in kurzen Förderrohrabschnitten gleichzeitig und unabhängig voneinander zu beseitigen. Dabei sollen die zur Realisierung notwendigen Einrichtungen so beschaffen sein, daß bei deren Ausfall in einem begrenzten Förderrohrabschnitt, die Funktion der stromaufwärts und stromabwärts davor und dahinter befindlichen Einrichtungen nicht beeinträchtigt wird.

Die Lösung dieser Aufgabe ist im kennzeichnenden Teil des Patentanspruchs 1 angegeben. Eine zugehörige Vorrichtung ist in dem Anspruch 3 angegeben.

Die weiteren Unteransprüche betreffen vorteilhafte Ausführungsformen.

In den Zeichnungen sind das erfindungsgemäße Verfahren anhand einfacher erläuternder Darstellungen und die erfindungsgemäße Vorrichtung zur Durchführung des Verfahrens schematisch dargestellt sowie in der nachfolgenden Beschreibung unter Angabe weiterer Vorteile näher erläutert.

Es zeigen

Fig. 1 die gesamte erfindungsgemäße Einrichtung beim Schüttguttransport ohne Stopfenbildung

Fig. 2 den Druckverlauf über der Leitungslänge bei der Situation gemäß Fig. 1

Fig. 3 die gesamte erfindungsgemäße Einrichtung bei der Entstehung eines Feststoffstopfens

Fig. 4 den Druckverlauf über der Leitungslänge bei der Situation gemäß Fig. 3

Fig. 5 die schematische Darstellung einer Ventil- und Druckregeleinrichtung zur Durchführung des erfindungsgemäßen Verfahrens

Fig. 6 eine weitere vorteilhafte Ausführung der Ventil- und Druckregeleinrichtung.

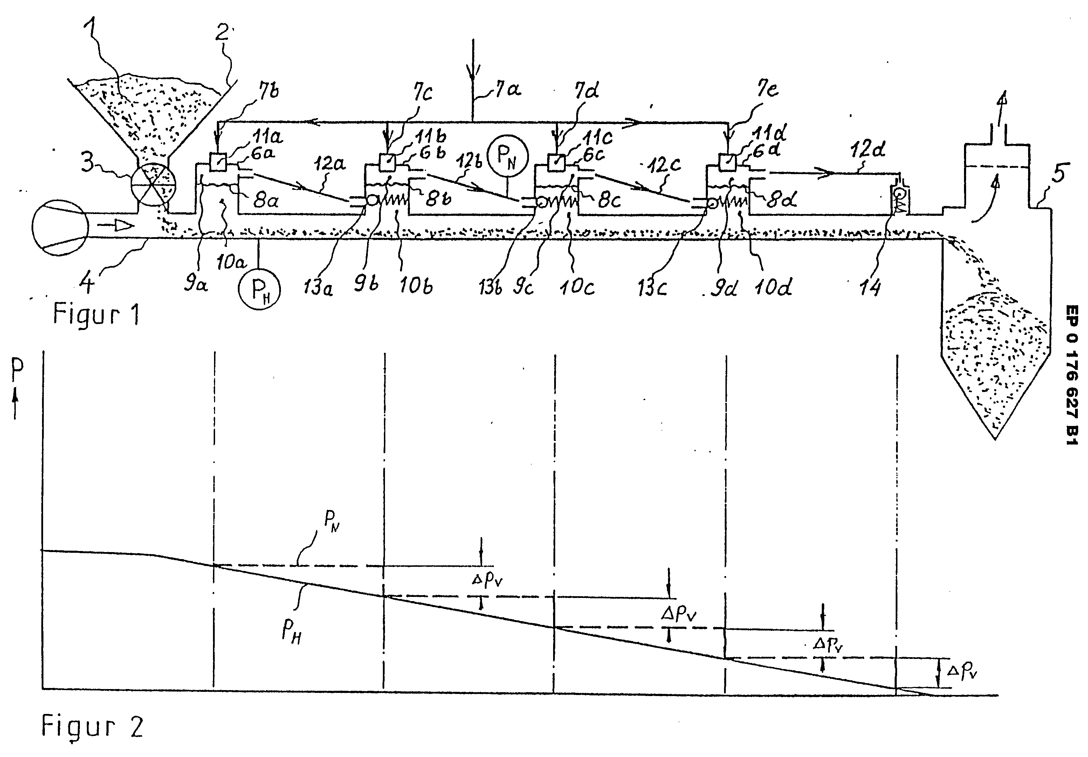

In Fig. 1 wird das zu fördernde Schüttgut (1) z. B. aus einem Vorratsgefäß (2) mit Hilfe eines Dosiergerätes (3) in die gas- oder flüssigkeitsdurchströmte Förderleitung (4) eingespeist und an deren Ende im Empfangsbehälter (5) abgeschieden.

Am Förderrohr sind verschiedene Druckregeleinrichtungen (6a, 6b, 6c, 6d) angebracht, deren Abstände etwa dem fünf- bis fünfzigfachen Förderrohrdurchmesser entsprechen. Die Regler (6a bis 6d) werden mit reinem Gas oder reiner Flüssigkeit aus den Leitungen (7b, 7c, 7d und 7e) gespeist, wobei der Druck in diesen Leitungen höher als der höchste Druck in der Förderleitung (4) ist. Die Druckregler (6a bis 6d) sind durch eine starre oder elastische Trennwand (8a bis 8d) in jeweils zwei Räume (9a bis 9d) und (10a bis 10d) unterteilt. Die Regeleinrichtungen (11a bis 11d) bewirken, daß in den Räumen 9a und 10a, 9b und 10b, 9c und 10c, 9d und 10d etc. zu jeder Zeit die gleichen Drücke herrschen. Das in den Räumen (11a bis 11d) befindliche reine Gas bzw. die reine Flüssigkeit kann über die Nebenleitungen (12a bis 12d) stromabwärts in das Förderrohr (4) einströmen. Dabei verhindern die Rückschlagventile (13a, 13b, 13c und 14) ein Eindringen vom Feststoff/Gas- bzw. Festoff/Flüssigkeits-Gemisch in die vom reinen Fluid durchströmten Räume (9a bis 9d). Die einstellbare Schließkraft der Rückschlagventile (13a, 13b, 13c und 14) ist so bemessen, daß diese erst bei einer bestimmten, vorgegebenen Druckdifferenz $\Delta P_v$ eine Strömung aus den Nebenleitungen (12a bis 12d) in die Räume (10b bis 10d) bzw. in das Innere der Förderleitung (4) erlauben. In Fig. 1 und im Folgenden ist der jeweils herrschende Druck im Förderrohr (4) mit $P_H$ und der im Nebenrohr mit $P_N$ bezeichnet.

In Fig. 2 ist der Druckabfall $P_H$ für den Fall einer an jedem Ort der Förderleitung gleichförmigen Feststoffkonzentration über der Leitungslänge aufgetragen. Die Druckregler (11a bis 11d) bewirken, daß sich in den stromaufwärts gelegenen Enden der Nebenrohre ein Druck $P_N$ einstellt, der mit dem jeweiligen Druck $P_H$ in der Förderleitung (4) identisch ist. Die Schließkraft der Rückschlagventile (13a bis 13c und 14) ist so eingestellt, daß sie durch die Druckdifferenz $\Delta P_v$ zwischen jeweils zwei benachbarten Druckregeleinrichtungen (6a bis 6d) während des hier gezeigten Feststofftransportes bei über der gesamten Förderleitungslänge gleichbleibenden Feststoffkonzentration gerade noch nicht überwunden werden kann.

Auf diese Weise wird beim « ungestörten » pneumatischen oder hydraulischen Transport eine Strömung reinen Fluids aus den Nebenleitungen (12a bis 12d) in die Förderleitung (4) vermieden.

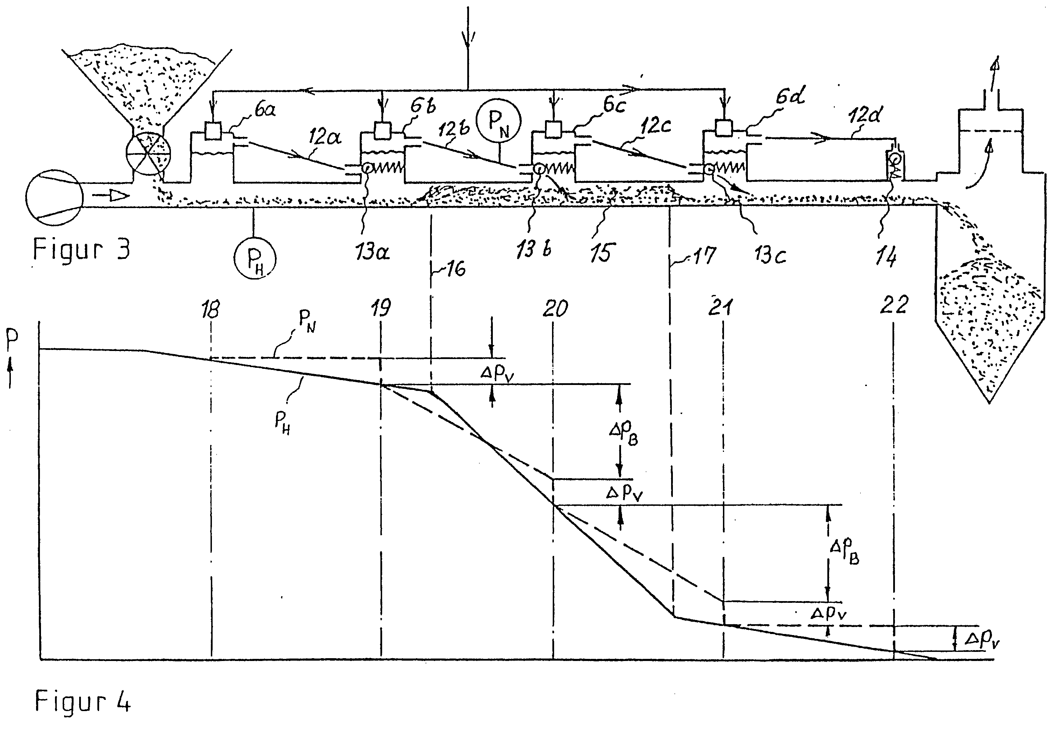

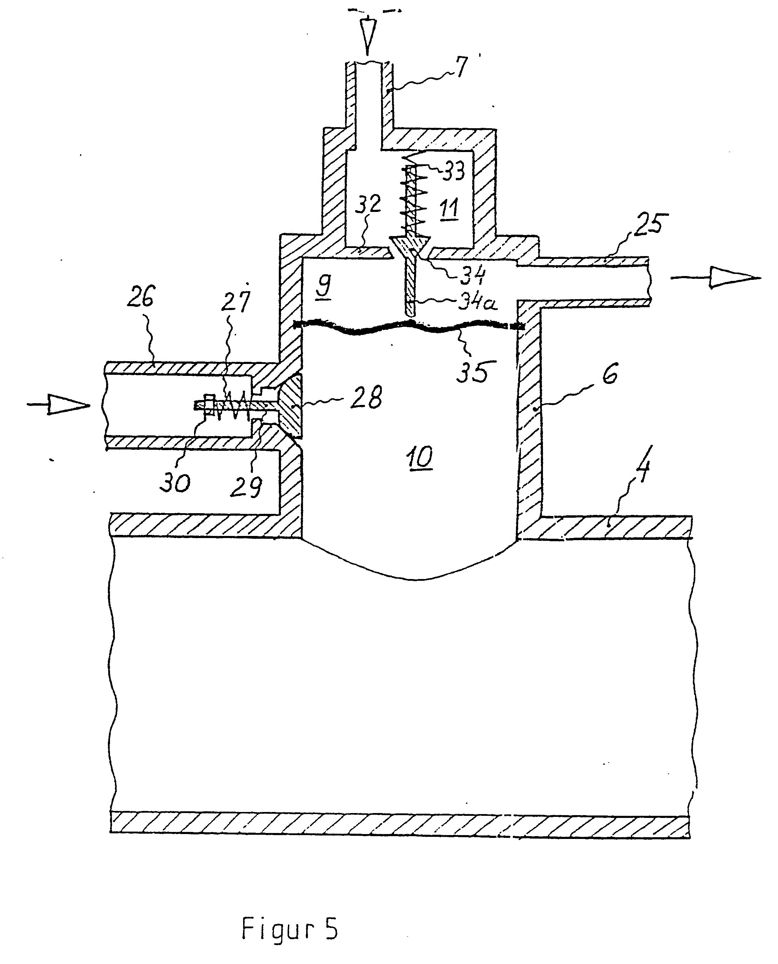

Fig. 3 zeigt erfindungsgemäße Fördereinrichtung bei einer sich gerade entwickelnden Verstopfung (15) zwischen den mit (16) und (17) bezeichneten Stellen im Förderrohr (4). Der Bereich der beginnenden Verstopfung ist im Diagramm entsprechend Fig. 4 durch einen infolge der lokalen, höheren Feststoffkonzentration steileren Druckabfall $P_H$ im Förderrohr (4) gekennzeichnet. Stromaufwärts und stromabwärts von der von der Verstopfung bedrohten Stelle herrscht noch der gleiche, wie der in Fig. 2 gezeigte Druckabfall $P_H$ im Förderrohr (4). Die Druckregeleinrichtungen (6a bis 6d) bewirken, daß sich in den Nebenrohrabschnitten (12a bis 12d) in den stromaufwärtigen Enden an den Stellen (18) bis (21) ein Druck $P_N$ einstelIt, der mit dem darunter befindlichen Druck $P_H$ im Förderrohr identisch ist. Am stromabwärts gelegenen Ende der Nebenrohrabschnitte (12a bis 12d) muß sich im Nebenrohr zwangsläufig ein Druck einstellen, der dem um den Schließdruck $\Delta P_v$ der Rückschlagventile (13a bis 13c) und (14) vergrößerten Druck $P_H$ in der Hauptleitung entspricht.

Im Beispiel gemäß Fig. 4 verhindert nun der Schließdruck $\Delta P_v$ der Rückschlagventile (13a) und (14) an den Stellen (19) und (22) ein Ausströmen von reinem Fluid aus den Nebenleitungen (12a und 12d) in die Förderleitung (4).

An den Stellen (20) und (21) dagegen ist die zur Verfügung stehende Druckdifferenz zwischen den Stellen (19) und (20) bzw. zwischen (20) und (21) größer als die zum Öffnen der Rückschlagventile (13b und 13c) erforderliche Druckdifferenz $\Delta P_v$. Der Differenzdruck $P_B$ steht nun zur Verfügung, um zur Auflösung des entstehenden Stopfens (15) reines Fluid an den Stellen (20) und (21) aus den Nebenrohrabschnitten in die Förderleitung (4) einströmen zu lassen.

Im Beispiel nach Fig. 3 ist es besonders vorteilhaft, daß neben der Einleitung von reinem Fluid in den entstehenden Stopfen unterhalb der Druckregeleinrichtung (6c) auch bereits unterhalb der stromabwärts hinter der beginnenden Verstopfung angebrachten Regeleinrichtung (6d) zusätzliches Fluid in die Förderleitung (4) geleitet wird. Dadurch wird die sich stromabwärts bewegende überhöhte lokale Feststoffkonzentration rasch weiter verringert, so daß sich der in Fig. 1 gezeigte Transportzustand sehr schnell wieder ergibt.

Mit Hilfe des erfindungsgemäßen Verfahrens und dessen zur Durchführung erforderlichen Einrichtungen lassen sich nicht nur entstehende Stopfen rechtzeitig erfassen und auflösen, sondern es können auch bereits entstandene, hartnäckige Verstopfungen auf die beschriebene Weise ohne äußeres Eingreifen beseitigt werden.

Solche Verstopfungen können z. B. nach einem Absinken des den Transportvorgang bewirkenden Flüssigkeits- oder Gasstromes oder bei einer kurzzeitigen, zu großen Feststoffzufuhr auftreten.

Ein weiterer Vorteil ist darin zu sehen, daß mehrere, gleichzeitig an verschiedenen Stellen des Förderrohres entstehende Stopfen unabhängig voneinander und gleichzeitig beseitig werden. Selbst bei Ausfall einer der vielen Druckregeleinrichtungen werden alle anderen in ihrer Wirkungsweise nicht beeinträchtigt.

Fig. 5 zeigt eine zweckmäßige Ausführungsform einer der Druckregeleinrichtungen (6a bis 6d) im Längsschnitt. Das Gehäuse (6) ist fest oder lösbar mit der Förderleitung (4) verbunden. Der Stutzen (25) mündest jeweils in einen, der in den Fig. 1 und 3 mit (12a) bis (12d) bezeichneten Nebenrohrabschnitt. Der Stutzen (26) steht jeweils mit dem stromabwärts liegenden Ende eines der Nebenrohrabschnitte (12a) bis (12c) in Verbindung und wird von einem mit der Feder (27) vorgespannten Rückschlagventil (28) verschlossen, wobei die Vorspannkraft der Feder (27) z. B. über ein am Ventilschaft (29) angebrachtes Gewinde und eine Einstellmutter (30) verstellbar ist.

Innerhalb des Ventilgehäuses (6) befindet sich ein Raum (11), in den reines Gas oder reine Flüssigkeit über den Stutzen (7) eingeleitet wird. Die Trennwand zwischen den Räumen (11) und (9) wird in der Ruhestellung durch einen mit einer Feder (33) belasteten Ventilkörper (34) verschlossen, dessen unteres Ende (34$^a$) von einer elastischen Membran (35) gegen die Kraft der Feder (33) bewegt werden kann.

In der Ruhestellung kann kein Gas bzw. keine Flüssigkeit aus dem Raum (11) in Raum (9) strömen. Wirkt aus der Richtung der Förderleitung (4) über den Raum (10) ein Druck auf die Membran (35) ein, bewegt sich diese in Richtung des Raumes (9) und drückt dabei den Ventilkörper (34) gegen die Kraft der Feder (33), so daß Gas oder Flüssigkeit aus dem Raum (11) in Raum (9) und damit in Richtung des Stutzens (25) strömen kann. Herrschen in den Räumen (9) und (10) die gleichen Drücke, wird die Öffnung in der Zwischenwand (32) der Räume (11) und (9) vom Ventilkörper (34) wieder verschlossen und damit eine Gasströmung aus Raum (11) in Raum (9) unterbunden.

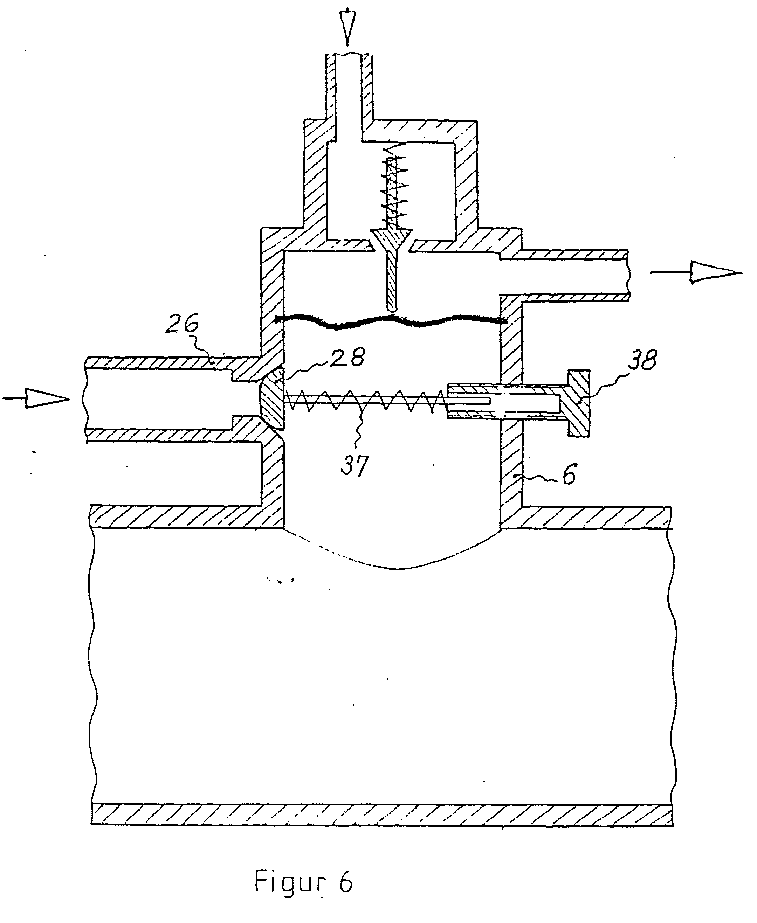

Fig. 6 zeigt eine weitere erfindungsgemäße Ausbildungsform der Druckregeleinrichtung in Kombination mit einem im Stutzen (26) angeordneten Rückschlagventil (28), dessen Schließkraft über eine Feder (37) und eine Einstellschraube (38) außerhalb des Gehäuses (6) verstellt werden kann.

## Patentansprüche

1. Verfahren zum pneumatischen oder hydraulischen Transport von Feststoffen (1) durch ein Förderrohr (4) mittels Über- oder Unterdruck, wobei das Förderrohr (4) in Abständen voneinander angeordnete Ventileinrichtungen (6a bis 6d) aufweist, die jeweils zum einen mit dem Förderrohr (4), zum anderen mit einer Zuleitung (7) für einen Teilstrom aus reinem Gas oder reiner Flüssigkeit verbunden sind und wobei eine Öffnung der stromaufwärts liegenden Ventileinrichtung und damit eine Zufuhr des Teilstroms aus reinem Gas oder Flüssigkeit aus der Zuleitung (7) über ein Nebenrohr (12a bis 12d) zu einer stromabwärts liegenden Stelle des Förderrohrs (4) dann erfolgt, wenn der Druckabfall im Förderrohr (4) infolge eines sich bildenden Stopfens (15) den normalen Druckabfall im Förderrohr (4) übersteigt, dadurch gekennzeichnet, daß die Ventileinrichtungen als Druckregeleinrichtungen (6a bis 6d) ausgebildet sind, daß der Druck des aus reinem Gas oder reiner Flüssigkeit bestehenden Teilstroms in der jeweiligen Druckregeleinrichtung (6a bis 6d) dem an dieser Meßstelle herrschenden Druck im Förderrohr (4) angeglichen wird, daß dieser Teilstrom über das Nebenrohr (12a bis 12d) dem Förderrohr (4) stromabwärts über die der Messung und Regelung des Druckes bewirkende stromaufwärts liegende Druckregeleinrichtung (6a bis 6d) zugeführt wird, wobei zu keinem Zeitpunkt eine Strömung aus dem Förderrohr (4) in das den Teilstrom führende Nebenrohr (12a bis 12d) dadurch erfolgt, daß jeweils mittels eines am Ende jedes Nebenrohres (12a bis 12d) vorgesehenen Rückschlägventils (13 a bis 13c, 14) der normale Druckabfall im Förderrohr (4) kompensiert wird.

2. Verfahren Nach Anspruch 1, dadurch gekennzeichnet, daß die Verschlußkraft des Rückschlagventils (13a bis 13c, 14) dem normalen Druckabfall im Förderrohr (4) ohne Stopfenbildung entspricht.

3. Vorrichtung zur Durchführung des Verfahrens nach Anspruch 1 oder 2, bestehend aus einem Förderrohr (4) und einer, einen Teilstrom aus reinem Gas oder reiner Flüssigkeit führenden Zuleitung (2), wobei das Förderrohr (4) in Abständen voneinander angeordnete Ventileinrichtungen (6a bis 6d) aufweist, die jeweils zum einen mit dem Förderrohr (4), zum anderen mit der Zuleitung (7) zur Zuführung des Teilstroms sowie mit einem zusätzlichen Nebenrohr (12a bis 12d) verbunden sind, das die Ventileinrichtung mit einer stromabwärts liegenden Stelle des Förderrohres (4) verbindet, dadurch gekennzeichnet, daß die Ventileinrichtungen als Druckregeleinrichtungen (6a bis 6d) ausgebildet sind, daß in jeder Druckregeleinrichtung (6a bis 6d) ein Druckausgleich zwischen dem Druck des Förderrohres (4) an dieser Stelle und dem stromawärts liegenden Ende des Nebenrohres (12a bis 12d) erfolgt, wobei der normale Druckabfall im Förderrohr (4) durch ein Rückschlagventil (13a bis 13c, 14) am Ende jedes Nebenrohres (12a bis 12d) kompensierbar ist und daß bei Anstieg des Druckes im Förderrohr (4) infolge einer Stopfenbildung die Druckausgleichsregelung zur Zufuhr des Teilstroms aus reiner Luft oder reiner Flüssigkeit in das Nebenrohr (12a bis 12d) und damit in das stromabwärts liegende Förderrohr (4) führt.

4. Vorrichtung nach Anspruch 3, dadurch gekennzeichnet, daß das Rückschlagventil (13a bis 13c, 14) nur eine Strömung des Teilstromes aus reiner Luft bzw. reiner Flüssigkeit in das Förderrohr (4) ermöglicht.

5. Vorrichtung nach Anspruch 3 oder 4, dadurch gekennzeichnet, daß die Druckregeleinrichtung (6a bis 6d) aus einem Gehäuse (6) mit einer Membran (35) besteht, die das Gehäuse (6) in einen mit den Förderrohr (4) in Verbindung stehenden Raum (10) und einen mit den Nebenrohren (12a bis 12d) in Verbindung stehenden Raum (9) unterteilt, daß sich an den Raum (9) ein weiterer, den Teilstrom aus reinem Gas oder reiner Flüssigkeit zuführenden Raum (11) anschließt, wobei die, die Räume (9) und (11) trennende Wand (32) mit einer Öffnung versehen ist, die bei Druckgleichheit in den Räumen (9) und (10) von einem, mit einer Feder (33) belasteten Ventilkörper (34) verschlossen und bei Druckanstieg im Förderrohr (4) und damit im Raum (10) durch die von der Membran (35) auf das in dem Raum (9) hineinragende Ende (34a) des Ventilkörpers (34) übertragenen Kraft geöffnet ist.

6. Vorrichtung nach Anspruch 4, dadurch gekennzeichnet, daß das Rückschlagventil (13a bis 13c, 28) am Ende jedes Nebenrohres (12a bis 12d) in die jeweils stromabwärts liegende nächstfolgende Druckregeleinrichtung (6b bis 6d) integriert ist und mit dieser eine bauliche und funktionelle Einheit bildet.

7. Vorrichtung nach Anspruch 3 oder 4, dadurch gekennzeichnet, daß das Ende des Nebenrohres (12a bis 12d) der letzten stromabwärts liegenden Druckregeleinrichtung (6d) mit wenigstens einem weiteren Rückschlagventil (14) zum Förderrohr (4) hin versehen ist.

## Claims

1. A process for the pneumatic or hydraulic conveyance of solid materials (1) through a conveying tube (4) by means of excess or reduced pressure, wherein the conveying tube (4) has valve devices (6a to 6d) which are spaced from one another and are each connected, on the one hand, to the conveying tube (4) and, on the other hand, to a supply line (7) for a partial stream of pure gas or pure liquid and wherein an opening of the upstream valve device and therefore a supply of the partial stream of pure gas or liquid from the supply line (7) via a subsidiary tube (12a to 12d) to a downstream position of the conveying tube (4) is effected when the pressure drop in the conveying tube (4) exceeds the normal pressure drop in the conveying tube (4) owing to the formation of a plug (15), characterised in that the valve devices are constructed as pressure regulating devices (6a to 6d), in that the pressure of the partial stream consisting of pure gas of pure liquid in the respective pressure regulating device (6a to 6d) is adapted to the pressure in the conveying tube (4) prevailing at this measuring position, in that this partial stream is supplied via the subsidiary tube (12a to 12d) to the conveying tube (4) downstream via the upstream pressure regulating device (6a to 6d) which measures and regulates the pressure, wherein a flow from the conveying tube (4) into the subsidiary tube (12a to 12d) carrying the partial stream is not effected at any moment since the normal pressure drop in the conveying tube (4) is compensated in each case by means of a check valve (13a to 13c, 14) provided at the end of each subsidiary tube (12a to 12d).

2. A process according to Claim 1, characterised in that the closing force of the check valve (13a to 13c, 14) corresponds to the normal pressure drop in the conveying tube (4) without formation of a plug.

3. Apparatus for carrying out the process according to Claim 1 or 2, consisting of a conveying tube (4) and a supply line (2) carrying a partial stream of pure gas or pure liquid, wherein the conveying tube (4) has valve devices (6a to 6d) which are spaced from one another and are each connected, on the one hand, to the conveying tube (4) and, on the other hand, to the supply line (7) for supplying the partial stream and to an additional subsidiary tube (12a to 12d) which connects the valve device to a downstream position of the conveying tube (4), characterised in that the valve devices are constructed as pressure regulating devices (6a to 6d), in that pressure compensation between the pressure of the conveying tube (4) at this position and the downstream end of the subsidiary tube (12a to 12d) takes place in each pressure regulating device (6a to 6d), wherein the normal pressure drop in the conveying tube (4) can be compensated by a check valve (13a to 13c, 14) at the end of each subisidiary tube (12a to 12d) and in that, in the event of a rise in the pressure in the conveying tube (4) owing to formation of a plug, pressure compensating regulation leads to the supply of the partial stream of pure air or pure liquid into the subsidiary tube (12a to 12d) and therefore into the downstream conveying tube (4).

4. Apparatus according to Claim 3, characterised in that the check valve (13a to 13c, 14) allows only a flow of the partial stream of pure air or pure liquid into the conveying tube (4).

5. Apparatus according to Claim 3 or 4, characterised in that the pressure regulating device (6a to 6d) consists of a housing (6) with a diaphragm (35) which divides the housing (6) into a chamber (10) communicating with the conveying tube (4) and a chamber (9) communicating with the subsidiary tubes (12a to 12d), in that a further chamber (11) supplying the partial stream of pure gas or pure liquid is connected to the chamber (9), the wall (32) separating the chambers (9 and 11) being provided with an opening which, when the pressure in the chambers (9) and (10) is equal, is sealed by a valve body (34) loaded by a spring (33) and, when the pressure in the conveying tube (4) and therefore in the chamber (10) rises, is opened by the force transmitted by the diaphragm (35) onto the end (34a) of the valve body (34) penetrating into the chamber (9).

6. Apparatus according to Claim 4, characterised in that the check valve (13a to 13c, 28) at the end of each subsidiary tube (12a to 12d) is integrated in the next pressure regulating device (6b to 6d) located downstream in each case and forms a constructional and functional unit with it.

7. Apparatus according to Claim 3 or 4, characterised in that the end of the subsidiary tube (12a to 12d) of the last, downstream pressure regulating device (6d) is provided with at least one further check valve (14) toward the conveying tube (4).

**Revendications**

1. Procédé pour le transport hydraulique ou pneumatique de matières solides (1) à travers un conduit (4) à l'aide d'une surpression ou d'une dépression, le conduit (4) présentant des moyens formant soupape (6a à 6d) agencés de façon espacée l'un de l'autre, qui, chacun, sont reliés, d'une part, au conduit (4) et, d'autre part, à une conduite (7) pour un courant partiel de gaz pur ou de liquide pur, et l'ouverture du moyen formant soupape se trouvant en amont et ainsi une arrivée du courant partiel de gaz ou de liquide pur à partir de la conduite (7) via un conduit secondaire (12a à 12d) vers une position se trouvant en aval du conduit (4) ayant lieu lorsque la chute de pression dans le conduit (4) dépasse la chute de pression normale dans le conduit (4) à cause d'un bouchon (15) en train de se former, caractérisé en ce que les moyens formant soupape sont réalisés sous forme de régulateurs de pression (6a à 6d), en ce que la pression du courant partiel constitué de gaz pur ou de liquide pur est adaptée, dans le régulateur de pression respectif (6a à 6d), à la pression régnant à cet endroit dans le conduit (4), en ce que ce courant partiel est amené via le conduit secondaire (12a à 12d) au conduit (4) en aval via le régulateur de pression (6a à 6d) se trouvant en amont, effectuant la mesure et le réglage de la pression, grâce à quoi, à aucun moment, un écoulement du conduit (4) dans le conduit secondaire (12a à 12d) guidant le courant partiel n'a lieu, du fait que, à chaque fois, la chute de pression normale dans le conduit (4) est compensée au moyen d'un clapet anti-retour (13a à 13c, 14) prévu à l'extrémité de chaque conduit secondaire (12a à 12d).

2. Procédé selon la revendication 1, caractérisé en ce que la force de fermeture du clapet anti-retour (13a à 13c, 14) correspond à la chute de pression normale dans le conduit (4) sans formation de bouchon.

3. Dispositif pour la mise en oeuvre du procédé selon la revendication 1 ou 2, comportant un conduit de transport (4) et une conduite (7) pour un courant partiel de gaz pur ou de liquide pur, le conduit (4) présentant des moyens formant soupape (6a à 6d) agencés de façon espacée l'un de l'autre, qui, chacun, sont reliés, d'une part, au conduit (4) et, d'autre part, à la conduite (7) pour l'amenée d'un courant partiel, ainsi qu'à un conduit secondaire supplémentaire (12a à 12d), qui relie le moyen formant soupape à un endroit en aval du conduit (4), caractérisé en ce que les moyens formant soupape sont réalisés sous forme de régulateurs de pression (6a à 6d), en ce que, dans chaque régulateur de pression (6a à 6d), a lieu une compensation de pression entre la pression du conduit (4) à cet endroit et l'extrémité se trouvant en aval du conduit secondaire (12a à 12d), la chute de pression normale dans le conduit (4) pouvant être compensée par un clapet anti-retour (13a à 13c, 14) à l'extrémité de chaque conduit secondaire (12a à 12d), et en ce que, lorsque la pression dans le conduit (4) augmente à cause d'une formation de bouchon, la régulation de la compensation de pression entraîne l'amenée du courant partiel d'air pur ou de liquide pur dans le conduit secondaire (12a à 12d) et ainsi dans le conduit (4) se trouvant en aval.

4. Dispositif selon la revendication 3, caractérisé en ce que le clapet anti-retour (13a à 13c, 14) ne permet qu'un écoulement du courant partiel d'air pur ou de liquide pur dans le conduit de transport (4).

5. Dispositif selon la revendication 3 ou 4, caractérisé en ce que le régulateur de pression (6a à 6d) est constitué d'un carter (6) comportant une membrane (35), qui subdivise le carter (6) en un espace (10) en liaison avec le conduit (4) et un espace (9) en liaison avec les conduits secondaires (12a à 12d), en ce que se raccorde, à l'espace (9), un autre espace (11) amenant le courant partiel de gaz pur ou de liquide pur, la paroi (32) séparant les espaces (9) et (11) étant munie d'une ouverture, qui est fermée par un corps de soupape (34) sollicité par un ressort (3), quand les pressions dans les espaces (9) et (10) sont identiques, et est ouverte, lorsque la pression augmente dans le conduit (4) et ainsi dans l'espace (10), par la force transmise par la membrane (35) sur l'extrémité (34a), en saillie dans l'espace (9), du corps de soupape (34).

6. Dispositif selon la revendication 4, caractérisé en ce que le clapet anti-retour (13a à 13c, 28) à l'extrémité de chaque conduit secondaire (12a à 12d) est intégré dans le régulateur de pression (6b à 6d) suivant se trouvant à chaque fois en aval et forme avec celui-ci une unité fonctionnelle et constructive.

7. Dispositif selon la revendication 3 ou 4, caractérisé en ce que l'extrémité du conduit secondaire (12a à 12d) du dernier régulateur de pression se trouvant en aval (6d) est munie d'au moins un autre clapet anti-retour (14) vers le conduit (4).

EP 0 176 627 B1

Figur 1

Figur 2

$P_N$

$P_H$

$\Delta P_v$

Figur 3

Figur 4

Figur 5

Figur 6